# EUROPÄISCHE PATENTSCHRIFT

(11) **EP 0 657 709 B1**
(45) Veröffentlichungstag und Bekanntmachung des Hinweises auf die Patenterteilung: **24.03.1999**
(21) Anmeldenummer: 94119178.5
(22) Anmeldetag: 05.12.1994
(51) Int. Cl.: F27D 5/00, F27D 23/00, C21D 9/08

(54) **Verfahren zum Brennen von Rohren und Vorrichtung zur Durchführung des Verfahrens**
Process and device for firing tubes
Procédé pour la cuisson de tubes et dispositif à cet effet

(30) Priorität: 07.12.1993 DE 4341648
(43) Veröffentlichungstag der Anmeldung: 14.06.1995
(73) Patentinhaber: Strobel, Klaus, Dipl.-Ing., D-95100 Selb (DE)
(72) Erfinder: Strobel, Klaus, Dipl.-Ing., D-95100 Selb (DE)
(74) Vertreter: Preissner, Nicolaus, Dipl.-Ing.

(56) Entgegenhaltungen:
- EP-A- 0 529 198
- DE-B- 1 228 643
- DE-C- 611 234
- FR-A- 2 617 582
- US-A- 1 876 733

## Beschreibung

Die Erfindung bezieht sich auf ein Verfahren zum Brennen von Rohren, die aus einer durch mechanische Aufbaugranulierung erzeugte keramische Masse isostatisch und/oder statisch gepreßt werden sowie eine Vorrichtung zur Durchführung dieses Verfahrens.

Beim Brennen von keramischen Rohren größerer Länge besteht das Problem, daß die Rohre so im Brennofen geführt werden, daß sie sich nicht verformen, d.h. nicht unrund werden oder über die Längsrichtung durchhängen, bzw. daß die durch die Preßformgebung erzeugte Präzision erhalten bleibt.

Nach bisher bekannten Verfahren werden die gepreßten Rohre auf zwei parallele Schienen aufgelegt und dort mittels gekrümmter Hebel entlang der Schienen durch den Brennofen gerollt. Hierbei ist jedoch ein Verziehen der Rohre und insbesondere ein Krummwerden über ihre Länge nicht auszuschließen.

Nach einem anderen bekannten Verfahren sind entlang des Brennofens rotierende Rollen hintereinander angeordnet, auf die dann das Brenngut aufgelegt und durch den Brennofen gerollt wird. Dabei ist es möglich, daß durch periodisches Anheben der jeweiligen Rolle der Vortrieb durch die Brennkammer erzeugt wird. Auch hierbei ist ein Verziehen nicht ausgeschlossen.

Den bekannten Verfahren ist jedoch gemeinsam, daß der notwendige Vortrieb durch den Ofen eine solche Anzahl von Umdrehungen des Rohres erforderlich macht, die rein aus Gründen des Brennprozesses nicht notwendig wären und nur für den eigentlichen Herstellungsprozeß unwichtigen rollenden Durchlauf durch den Ofen benötigt werden.

Es ist davon auszugehen, daß nur in bestimmten Temperaturbereichen des Ofens, die mit dem Erweichen der Rohre beim Sinterprozeß in Zusammenhang stehen, eine Drehung des Rohres erforderlich oder sinnvoll ist und daß der Drehsinn zweckmäßigerweise auch umzukehren wäre.

Rohre, die aus einer keramischen Masse isostatisch und/oder statisch gepreßt werden, haben zwar nur eine Restfeuchte von 5% - 8% nach dem Pressen, sind aber trotzdem sehr stabil. Beim Brennen schwinden die Rohre sehr viel geringer als z.B. Produkte, die auf dem Wege der Extrusion oder ähnlichen Herstellungsverfahren erzeugt werden. Dennoch kann auch hier insbesondere bei längeren Rohren die Gefahr eines Durchhängens oder Unrundwerdens bestehen.

In der DE-C 611 234 ist ein Verfahren und eine Vorrichtung zum Brennen bzw. Glasieren keramischer Körper in einem Ofen beschrieben, wobei in dem Ofen eine horizontal ausgerichtete, angetriebene Zentralwelle mit in Axialrichtung beabstandeten Haltebleche vorgesehen ist. Die Haltebleche dienen der Festlegung von koaxialen Stangen, an denen Porzellanrohre mit einem größeren Innendurchmesser als dem Außendurchmesser der Stangen angeordnet sind. Weiterhin ist aus der US-A 1,876,733 ein Sinterofen bekannt, der eine horizontal ausgerichtete rotierende Welle aufweist, an der mittels radialen Stangen ein Sinterteil gehalten ist.

Der vorliegenden Erfindung liegt die Aufgabe zugrunde, ein Verfahren und eine Vorrichtung anzugeben mit denen ein Verziehen derartiger Rohre beim Brennen praktisch ausgeschlossen ist, und mit denen auf einfache Weise möglich ist, frisch gepreßte Rohre aus keramischem Material unmittelbar einem Brennvorgang zuzuführen.

Zur Lösung dieser Aufgabe ist erfindungsgemäß ein Verfahren zum Brennen von Rohren vorgesehen, die aus einer durch mechanische Aufbaugranulierung erzeugte keramische Masse isostatisch oder statisch gepreßt werden, bei dem das zu brennende Rohr seitlich auf eine zumindest einseitig an einem Grundgestell gelagerte und rotierend angetriebene Rolle kleineren Durchmessers als dem Innendurchmesser des Rohrs geschoben und durch Rotation der Rolle mitgedreht wird. Das Verfahren ist dadurch gekennzeichnet, daß das Grundgestell, an dem seitlich ein von der rotierenden Rolle durchdrungener Wandabschnitt festgelegt ist, der nach innen zur Brennkammer hin stufenförmig verjüngt ist, nach dem Aufschieben des Rohrs in die Brennkammer eingefahren wird, bis der Wandabschnitt mit seinen Stufungen an dem entsprechenden Wandausschnitt des Brennofens anliegt und daß das Rohr solange rotierend mit Wechsel der Drehrichtung in der Brennkammer gehalten wird, bis der Brennvorgang abgeschlossen ist.

Damit ist das zu brennende Rohr über seine gesamte Länge von der eingeschobenen Rolle abgestützt und dreht sich durch die rotierende Rolle langsam mit, so daß ein Verziehen, Unrundwerden oder Durchhängen nicht mehr möglich ist.

Zweckmäßig ist es dabei, wenn die rotierende Einheit durch die Länge des Brennofens hindurchgeführt wird.

Darüberhinaus ist es möglich, daß die Rohre unmittelbar nach dem Pressen ohne weitere Zwischentrocknung auf die Rollen geschoben und rotierend durch den Brennofen gefahren werden.

Bei einer Vorrichtung zur Durchführung des Verfahrens ist ein Grundgestell vorgesehen, in dem mindestens eine über einen Motor rotierend angetriebene Rolle zumindest einseitig gelagert ist, wobei das Grundgestell seitlich einen von der Rolle durchdrungenen Wandabschnitt der Brennkammer mit einer umlaufenden Dichtung trägt. Erfindungsgemäß ist das Grundgestell verfahrbar und der Wandabschnitt mit der Rolle und dem aufgeschobenen Rohr in die entsprechende seitliche Wandöffnung der Brennkammer einfahrbar.

Zweckmäßigerweise ist die Rolle außerhalb der Brennkammer einseitig fliegend gelagert. Es ist aber auch möglich, daß die Rolle innerhalb der Brennkammer gegengelagert ist.

Um ein Ablaufen der Rohre von der Rolle zu vermeiden, ist es ferner vorteilhaft, wenn die Drehrichtung der Rolle periodisch umkehrbar ist.

Dabei können auf dem Grundgestell mehrere rotierend angetriebene Rollen nebeneinander in einer Reihe oder auch mehrere Reihen rotierend angetriebener Rollen übereinander angeordnet sein.

Bei einer stationären Anordnung weist das Grundgestell einen seitlichen, sich parallel zu den rotierenden Rollen erstreckenden, bodennahen Fahrrahmen mit Rädern auf, der in Schienen quer zur Brennkammer und unterhalb derselben seitlich verfahrbar ist, wobei die rotierenden Rollen mit den aufgeschobenen Rohren seitlich bis zum Abschluß des Wandabschnittes in der vorgesehenen Wandöffnung in die Brennkammer einfahrbar sind.

Dabei ist es zweckmäßig, wenn der vom Grundgestell getragene Wandabschnitt stufenförmig nach innen zur Brennkammer hin verjüngt ist, um damit die Wirkung eines Dichtlabyrinthes zu erreichen.

Die umlaufende Dichtung zwischen Wandabschnitt und Wandöffnung kann aus je einem parallel und entlang des Randes des Wandabschnittes und der Wandöffnung vertikal abragenden Dichtsteg bestehen, der von einer federbelasteten Dichtleiste überdeckt und abgedichtet ist.

Für einen kontinuierlichen Durchlaufbetrieb ist es zweckmäßig, wenn das Grundgestell parallel zur Brennkammer verfahrbar ist und einen Wandabschnitt trägt, der entlang einer seitlichen schlitzförmigen und in Längsrichtung durchgehenden Wandöffnung der Brennkammer gegen die Ränder der Wandöffnung abdichtend geführt ist.

Dabei ist es möglich, daß mehrere, mit zu brennenden Rohren bestückte Grundgestelle dicht an dicht hintereinander entlang der Wandöffnung geführt sind.

Jedes Grundgestell kann dabei über Rollen in mindestens einer, parallel zur Brennkammer verlaufenden Schiene geführt sein.

Zweckmäßigerweise ist der verfahrbare Wandabschnitt auf Ober- und Unterseite mit einer zueinander parallelen Stufung versehen.

Bezüglich der Dichtung zwischen verfahrbarem Wandabschnitt und durchgehender seitlicher Wandöffnung ist es zweckmäßig, wenn die Dichtung je einen entlang der Ober- und der Unterkante des Wandabschnittes und der Wandöffnung auf deren Außenseite verlaufenden und vertikal abragenden Dichtsteg aufweist, die von über die Länge der Brennkammer durchgehenden, federbelasteten Dichtieisten gleitend abgedeckt sind.

Anhand einer schematischen Zeichnung sind Aufbau und Funktionsweise von Ausführungsbeispielen nach der Erfindung näher erläutert. Dabei zeigen:
- Fig. 1: das Grundprinzip einer Rohrhalterung in vorderansicht,
- Fig. 2: die Rohrhalterung in einer Ansicht von der Stirnseite her,
- Fig. 3: einen Längsschnitt durch einen Brennofen mit Rohrhalterungen für eine stationäre Anlage,
- Fig. 4: einen Querschnitt durch den Brennofen mit Aufsicht auf die Rohrhalterung,
- Fig. 5: eine Seitenansicht auf die herausfahrbare Wandöffnung des Brennofens,
- Fig. 6: einen Querschnitt durch einen Brennofen zum kontinuierlichen Brennen keramischer Rohre,
- Fig. 7: eine Seitenansicht eines herausgefahrenen Abschnittes der Rohrhalterung und
- Fig. 8: eine Seitenansicht auf die Brennkammer mit den aufeinanderfolgenden Wandabschnitten.

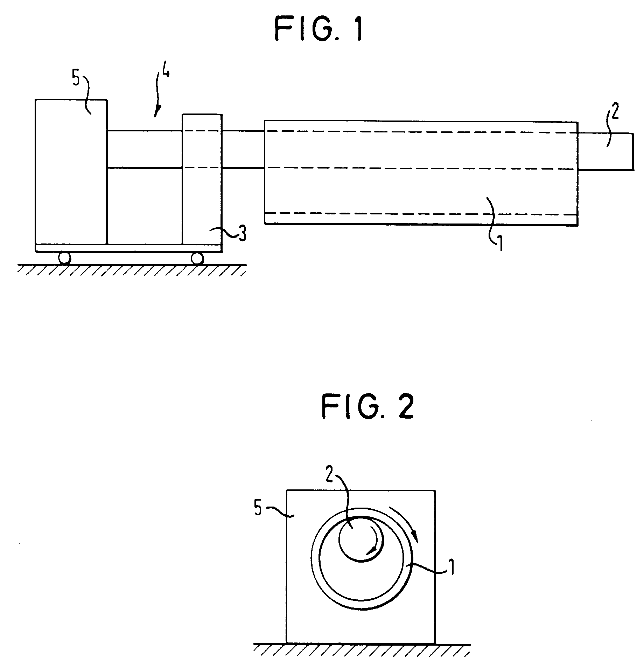

Wie man aus der schematischen Darstellung nach Fig. 1 und 2 ersieht, ist zur verzugsfreien Lagerung und Aufhängung von zu brennenden Rohren 1 aus keramischem Material eine fliegend gelagerte Rolle 2 vorgesehen, die in einer Lagerung 3 in einem längs- oder quer verfahrbaren Grundgestell 4 abgestützt und in einem weiteren Lager 5 von einem nicht näher dargestellten Motor rotierend angetrieben wird. Auf das freie Ende der Rolle 2 wird nun ein zu brennendes Rohr 1 aufgeschoben, wobei der Innendurchmesser des Rohres 1 im allgemeinen erheblich größer als der Durchmesser der Rolle 2 ist. Durch die Rotation der Rolle 2 wird dabei auch das Rohr 1 rotierend mitgenommen; dabei führt beispielsweise bei einem Durchmesserverhältnis von 1:3 zwischen Rolle 2 und Rohr 1 und einer Drehzahl der Rolle 2 von 1/min. das Rohr 1 eine Umdrehung innerhalb von 3 min. aus.

Diese Einheit aus rotierender Rolle 2 und mitdrehendem Rohr 1 wird nun in noch zu beschreibender Weise in die Brennkammer eines Brennofens eingeführt und dort bis zum Abschluß des Brennvorganges entweder rotierend mit Wechsel der Drehrichtung oder auch ruhend gehalten.

Mit einer solchen rotierenden Lagerung eines Rohres über seine gesamte Länge wird ein Verziehen, Unrundwerden oder Durchhängen des Rohres sicher vermieden. Dies gilt insbesondere für isostatisch gepreßte Rohre, die auch schon vor dem Brennen eine hohe Festigkeit aufweisen.

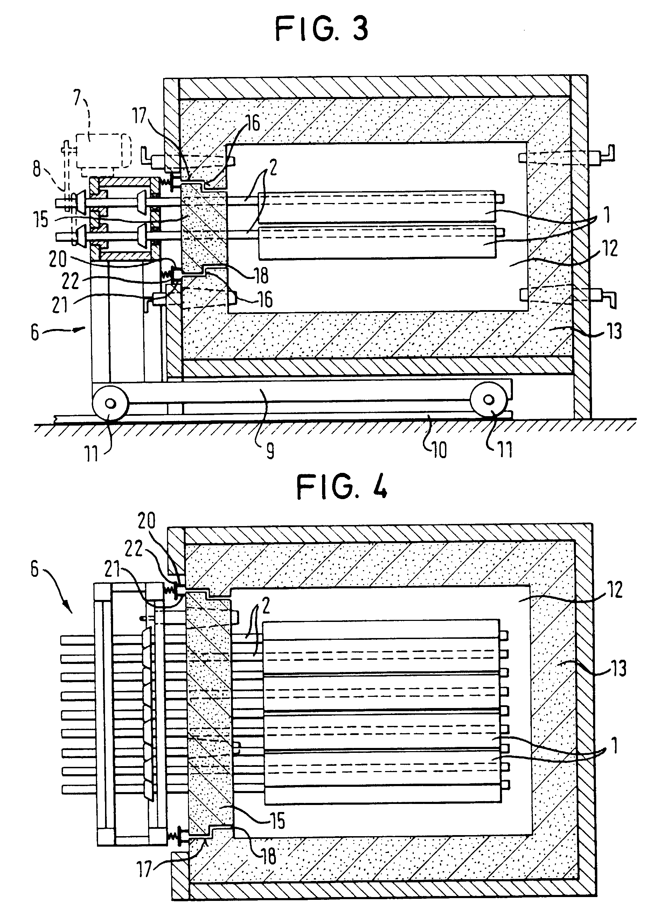

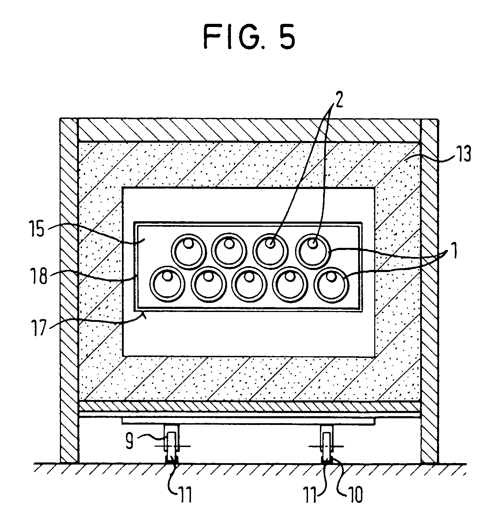

In den Fig. 3, 4 und 5 ist eine mögliche Gesamtanordnung eines stationären Brennvorganges gezeigt. Dabei ist ein seitlich verfahrbares Grundgestell 6 vorgesehen, das im oberen Bereich mehrere rotierend angetriebene Rollen 2 aufweist, wie man insbesondere aus der Seitenansicht nach Fig. 5 erkennt, wobei jeweils mehrere Rollen 2 nebeneinander in zwei Reihen übereinander angeordnet sind. Dabei sind die Rollen 2 nur der oberen Rohrreihe gestrichelt eingezeichnet. Diese Rollen 2 werden über einen Motor 7 und ein entsprechendes Getriebe 8 mit der gewünschten Drehzahl angetrieben. Parallel zu den Rollen 2 ist im unteren Bereich des Grundgestells 6 ein Fahrrahmen 9 mit in Schienen 10 laufenden Rädern 11 vorgesehen, wodurch das Grundgestell 6 quer zur Brennkammer 12 des Brennofens 13 verfahren werden kann.

Dabei ist seitlich am Grundgestell 6 ein von den rotierenden Rollen 2 durchdrungener Wandabschnitt 15 festgelegt, wobei dieser Wandabschnitt 15 nach innen zur Brennkammer 12 hin stufenförmig verjüngt ist, um damit die Wirkung eines Art Dichtlabyrinth zu erreichen.

Die Funktionsweise ist nunmehr die folgende: Wenn das Grundgestell 6 zusammen mit dem Wandabschnitt 15 seitlich aus der Brennkammer 12 herausgefahren ist, können die Rollen 2 mit neuen Rohren 1 bestückt und anschließend wieder in die Brennkammer 12 eingefahren werden, bis der Wandabschnitt 15 mit seinen Stufungen 16 an dem entsprechenden Wandausschnitt 17 des Brennofens 13 anliegt. Der Spalt 18 zwischen dem Wandabschnitt 15 und der Wandöffnung 17 ist dabei auf der Außenseite noch von einer umlaufenden Dichtung abgedeckt, die aus je einem parallel und entlang des Randes des Wandabschnittes 15 und der Wandöffnung 17 vertikal abragenden Dichtsteg 20 und 21 besteht, die von einer federbelasteten Dichtleiste 22 überdeckt und abgedichtet sind.

Es ist dabei aber auch grundsätzlich möglich, daß die Rollen 2 nicht nur einseitig fliegend gelagert sind, sondern daß innerhalb der Brennkammer 12 die freien Enden der Rollen gegengelagert sind, was jedoch nicht im Einzelnen dargestellt ist.

Die Rohre 1 werden solange rotierend mit Wechsel der Drehrichtung oder auch ruhend in der Brennkammer 12 gehalten, bis der Brennvorgang abgeschlossen ist, um dann nach Wiederausfahren des Grundgestells 6 von den Rollen 2 abgenommen und durch neue Rohre 1 ersetzt zu werden.

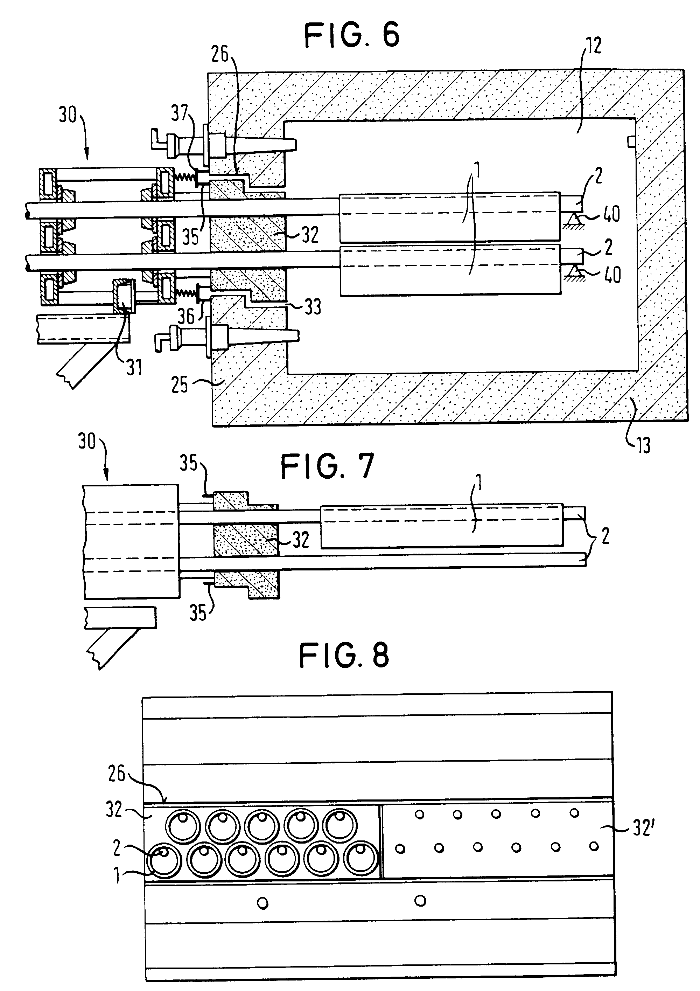

In den Fig. 6, 7 und 8 ist eine Anordnung zum kontinuierlichen, fortlaufenden Brennen derartiger Rohre 1 dargestellt. Der wesentliche Unterschied zu dem vorhergehenden Ausführungsbeispiel besteht dabei darin, daß die seitliche Wandung 25 des Brennofens 13 eine praktisch schlitzförmig und sich entlang der gesamten Länge des Brennofens 13 erstreckende Wandöffung 26 aufweist. Dabei trägt das seitliche Grundgestell 30, das in Rollen 31 geführt und parallel zum Brennofen 13 verfahren werden kann, einen gestuften Wandabschnitt 32 von maximal der halben Länge des Brennofens, wie man das insbesondere aus Fig. 8 ersieht.

Nach Aufschieben der Rohre 1 auf die Rollen 2 wird das Grundgestell 30 mit dem entsprechenden Wandabschnitt 32 von vorn in die entsprechende Wandöffnung 36 und die Brennkammer 12 eingefahren und kontinuierlich durch die Brennkammer 12 hindurchbewegt. Dabei ist auch hier eine Gegenlagerung 40 der Rollen 2 möglich.

Wie man aus Fig. 8 erkennt, befinden sich hierbei gerade zwei Wandabschnitte 32 und 32' innerhalb der Wandöffnung 26, durch die sie kontinuierlich hindurchgefahren werden.

Zur Abdichtung des Spaltes 33 zwischen Wandöffnung 26 und Wandabschnitt 32 sind parallel zum Spalt 33 auf dem Wandabschnitt 32 vertikal abragende Dichtungsstege 35 und parallele Dichtungsstege 36 entlang der Wandöffnung 26 vorgesehen, die jeweils über eine federbelastete Dichtleiste 37 gleitend abgedeckt sind.

Bei einer solchen kontinuierlich arbeitenden Anlage werden vor der Brennkammer frisch gepreßte Rohre 1 ohne weitere Zwischentrocknung unmittelbar auf die Rollen 2 aufgeschoben und dann mit dem verfahrbaren Grundgestell 30 in der angegebenen Weise durch die Brennkammer 12 gefahren, wobei sich jeweils ein Brennwagen dicht an den vorhergehenden anschließen kann. Nach Verlassen der Brennkammer 12 können dann die gebrannten Rohre 1 unmittelbar abgenommen und gekühlt werden.

Mit dem beschriebenen Verfahren und den entsprechenden Vorrichtungen ist es also auf einfache Weise möglich, frisch gepreßte Rohre aus keramischem Material unmittelbar einem Brennvorgang zuzuführen, ohne daß dabei ein Verziehen oder Unrundwerden der Rohre auftreten kann.

## Patentansprüche

1. Verfahren zum Brennen von Rohren, die aus einer durch mechanische Aufbaugranulierung erzeugte keramische Masse isostatisch oder statisch gepreßt werden, bei dem das zu brennende Rohr seitlich auf eine zumindest einseitig an einem Grundgestell gelagerte und rotierend angetriebene Rolle kleineren Durchmessers als dem Innendurchmesser des Rohrs geschoben und durch Rotation der Rolle mitgedreht wird, dadurch gekennzeichnet, daß das Grundgestell, an dem seitlich ein von der rotierenden Rolle durchdrungener Wandabschnitt festgelegt ist, der nach innen zur Brennkammer hin stufenförmig verjüngt ist, nach dem Aufschieben des Rohrs in die Brennkammer eingefahren wird, bis der Wandabschnitt mit seinen Stufungen an dem entsprechenden Wandausschnitt des Brennofens anliegt und daß das Rohr solange rotierend mit Wechsel der Drehrichtung in der Brennkammer gehalten wird, bis der Brennvorgang abgeschlossen ist.

2. Verfahren nach Anspruch 1, dadurch gekennzeichnet, daß die rotierende Einheit durch die Länge des Brennofens hindurchgeführt wird.

3. Verfahren nach Anspruch 1 oder 2, dadurch gekennzeichnet, daß die Rohre unmmittelbar nach dem Pressen ohne weitere Zwischentrocknung auf die Rollen geschoben und rotierend durch den Brennofen gefahren werden.

4. Vorrichtung zur Durchführung des Verfahrens nach einem der Ansprüche 1 bis 3 mit einem Grundgestell (4; 6; 30) in dem mindestens eine über einen Motor (7) rotierend angetriebene Rolle (2) zumindest einseitig gelagert ist, wobei das Grundgestell (6; 30) seitlich einen von der Rolle (2) durchdrungenen Wandabschnitt (15; 32) der Brennkammer (12) mit einer umlaufenden Dichtung (21; 37) trägt, dadurch gekennzeichnet, daß das Grundgestell (4; 6; 30) verfahrbar ist und daß der Wandabschnitt (15; 32) mit der Rolle (2) und dem aufgeschobenen Rohr (1) in die entsprechende seitliche Wandöffnung (17; 26) der Brennkammer (12) einfahrbar ist.

5. Vorrichtung nach Anspruch 4, dadurch gekennzeichnet, daß die Rolle (2) außerhalb der Brennkammer (12) einseitig fliegend gelagert ist.

6. Vorrichtung nach Anspruch 4 oder 5, dadurch gekennzeichnet, daß das freie Ende der Rolle (2) innerhalb der Brennkammer (12) gegengelagert ist.

7. Vorrichtung nach Anspruch 4, dadurch gekennzeichnet, daß die Drehrichtung der Rolle (2) periodisch umkehrbar ist.

8. Vorrichtung nach einem der Ansprüche 4 bis 7, dadurch gekennzeichnet, daß auf dem Grundgestell (6; 30) mehrere rotierend angetriebene Rollen (2) nebeneinander in einer Reihe angeordnet sind.

9. Vorrichtung nach Anspruch 8, dadurch gekennzeichnet, daß auf dem Grundgestell (6; 30) mehrere Reihen rotierend angetriebener Rollen (2) übereinander angeordnet sind.

10. Vorrichtung nach einem oder mehreren der Ansprüche 4 bis 9, dadurch gekennzeichnet, daß das Grundgestell (6) einen seitlichen, sich parallel zu den Rollen (2) erstreckenden, bodennahen Fahrrahmen (9) mit Rädern (11) aufweist, der in Schienen (10) quer zur Brennkammer (12) und unterhalb derselben seitlich derart verfahrbar ist, daß die rotierenden Rollen (2) mit den aufgeschobenen Rohren (1) seitlich bis zum Abschluß des Wandabschnittes (15) in der vorgesehenen Wandöffnung (17) in die Brennkammer (12) einfahrbar sind.

11. Vorrichtung nach Anspruch 10, dadurch gekennzeichnet, daß der vom Grundgestell (6) getragene Wandabschnitt (15) stufenförmig (16) nach innen zur Brennkammer (12) hin verjüngt ist.

12. Vorrichtung nach Anspruch 10 oder 11,dadurch gekennzeichnet, daß die umlaufende Dichtung (20, 21, 22) zwischen Wandabschnitt (15) und Wandöffnung (17) aus parallelen und entlang des Randes des Wandabschnittes (15) und der Wandöffnung (17) vertikal abragenden Dichtsstegen (20, 21) besteht, die von einer federbelasteten Dichtleiste (22) überdeckt und abgedichtet sind.

13. Vorrichtung nach einem oder mehreren der Ansprüche 4 bis 9, dadurch gekennzeichnet, daß für den kontinuierlichen Durchlaufbetrieb das Grundgestell (30) parallel zur Brennkammer (12) verfahrbar ist und einen Wandabschnitt (32) trägt, der entlang einer seitlichen schlitzförmigen und in Längsrichtung durchgehenden Wandöffnung (26) der Brennkammer (12) gegen die Ränder der Wandöffnung (26) abdichtend geführt ist.

14. Vorrichtung nach Anspruch 13, dadurch gekennzeichnet, daß mehrere, mit zu brennenden Rohren (1) bestückte Grundgestelle (30) dicht an dicht hintereinander entlang der Wandöffnung (26) geführt sind.

15. Vorrichtung nach Anspruch 13, dadurch gekennzeichnet, daß jedes Grundgestell (30) über Rollen (31) in mindestens einer, parallel zur Brennkammer (12) verlaufenden Schiene (38) geführt ist.

16. Vorrichtung nach Anspruch 13, dadurch gekennzeichnet, daß der verfahrbare Wandabschnitt (32) auf Ober- und Unterseite mit einer zueinander parallelen Stufung (39) versehen ist.

17. Vorrichtung nach Anspruch 15, dadurch gekennzeichnet, daß die Dichtung zwischen verfahrbarem Wandabschnitt (32) und durchgehender seitlicher Wandöffnung (26) entlang der Ober- und der Unterkante des Wandabschnittes (32) und der Wandöffnung (26) auf deren Außenseite verlaufende und vertikal abragende Dichtstege (35, 36) aufweist, die von durchgehenden federbelasteten Dichtleisten (37) gleitend abgedeckt sind.

## Claims

1. A method of firing pipes compacted isostatically or statically from a ceramic mass produced by mechanical build-up granulation in which the pipe to be fired is pushed laterally onto a rotating driven roller mounted at least on one side on a base frame and having a diameter smaller than the inner diameter of the pipe, the pipe being included in the rotation of the roller, characterized in that the base frame, on the side of which a wall section penetrated by the rotating roller is defined, the wall section being stepped tapered inwardly in the direction of the firing chamber, is run into the firing kiln, after the pipe has been pushed into place, until the wall section with its steps is in contact with the corresponding wall cutout of the firing kiln and that the pipe is held alternatingly rotating in the firing kiln until the firing process is concluded.

2. The method as set forth in claim 1, characterized in that the rotating unit is passed through the full length of the firing kiln.

3. The method as set forth in claim 1 or 2, characterized in that the pipes are pushed onto the rollers directly after pressing without any further intermediate drying and are run through the firing kiln rotatingly.

4. A device for implementing the method as set forth in any of the claims 1 to 3 comprising a base frame (4;6;30) in which at least one motor(7)-powered rotating roller (2) is mounted at least on one side, the base frame (6;30) carrying on the side a wall section (15;32) of the firing chamber (12) penetrated by the roller (2) with a rotating seal (21;37), characterized in that the base frame (4;6;30) can be travelled and the wall section (15;32) together with the roller (2) and the pipe (1) pushed into place thereon can be introduced into the corresponding side wall opening (17;26) of the firing chamber (12).

5. The device as set forth in claim 4, characterized in that the roller (2) is cantilever-mounted at one end outside of the firing chamber (12).

6. The device as set forth in claim 4 or 5, characterized in that the free end of the roller (2) is counter-mounted within the firing chamber (12).

7. The device as set forth in claim 4, characterized in that the direction of rotation of the roller (2) can be periodically reversed.

8. The device as set forth in any of the claims 4 to 7, characterized in that several rotatively driven rollers (2) are arranged on the base frame (6;30) juxtaposed in one row.

9. The device as set forth in claim 8, characterized in that several rows of rotatively driven rollers (2) are arranged on the base frame (6;30) one above the other.

10. The device as set forth in any of the preceding claims 4 to 9, characterized in that the base frame (6) comprises a travelling side chassis (9)with wheels (11), which is located near to the floor and extending parallel to the rollers (2) and can be travelled in rails (10) transversely to and laterally underneath the firing chamber (12), whereby the rotating rollers (2) can be run into the firing chamber (12) with the pipes (1) pushed into place laterally up to closure of the wall section (15) in the provided wall opening (17).

11. The device as set forth in claim 10, characterized in that the wall section (15) carried by the base frame (6) is tapered stepped (16) inwardly in the direction of the firing chamber (12).

12. The device as set forth in claim 10 or 11, characterized in that the circumferential seal (20,21,22) between wall section (15) and wall opening (17) consists of sealing webs (20, 21) running parallel to and along the rim of the wall section (15) and protruding vertically from the wall opening (17), the sealing webs (20, 21) being covered and sealed by a spring-loaded sealing strip (22).

13. The device as set forth in any of the preceding claims 4 to 9, characterized in that for continous thruput operation the base frame (30) can be travelled parallel to the firing chamber (12) and carries a wall section (32) which is guided along a side, slot-shaped wall opening (26) running full length in the wall of the firing chamber (12) and sealed off from the edges of the wall opening (26).

14. The device as set forth in claim 13, characterized in that several base frames (30) fitted with pipes (1) to be fired are guided shoulder-to-shoulder in sequence along the wall opening (26).

15. The device as set forth in claim 13, characterized in that each base frame (30) is guided via rollers (31) in at least one rail (38) running parallel to the firing chamber (12).

16. The device as set forth in claim 13, characterized in that the travelling wall section (32) is provided top and bottom with a step (39) each parallel to the other.

17. The device as set forth in claim 15, characterized in that the seal between the travelling wall section (32) and the full-length side wall opening (26) comprises a sealing webs (35, 36) running along the top and bottom edge of the wall section (32) and of the wall opening (26) on the outer side thereof and protruding vertically therefrom, the sealing webs (35, 36) being slidingly covered by full-length, spring-loaded sealing strips (37).

## Revendications

1. Procédé pour la cuisson de tubes qui sont pressés par voie isostatique ou statique à partir d'une masse céramique générée par granulation structurelle mécanique, dans lequel on enfile latéralement le tube à cuire sur un cylindre entraîné en rotation, monté du moins unilatéralement sur un châssis de base et dont le diamètre est inférieur au diamètre intérieur du tube, et on le fait tourner par rotation du cylindre, caractérisé en ce que le châssis de base, sur lequel est fixé latéralement un tronçon de paroi, traversé par le cylindre en rotation et en rétrécissement par gradins vers l'intérieur en direction de la chambre de cuisson, est introduit dans la chambre de cuisson après enfilement du tube, jusqu'à ce que le tronçon de paroi s'appuie par ses gradins contre l'évidement de paroi correspondant du four de cuisson, et en ce que le tube est maintenu aussi longtemps en rotation dans la chambre de cuisson et en alternant la direction de rotation, que l'opération de cuisson s'achève.

2. Procédé selon la revendication 1, caractérisé en ce que l'unité en rotation est guidée à travers la longueur du four de cuisson.

3. Procédé selon l'une ou l'autre des revendications 1 et 2, caractérisé en ce que l'on enfile les tubes sur les cylindres directement après le pressage, sans séchage intermédiaire, et en ce qu'on les déplace en rotation à travers le four de cuisson.

4. Dispositif pour mettre en oeuvre le procédé selon l'une quelconque des revendications 1 à 3, comportant un châssis de base (4 ; 6 ; 30) dans lequel est monté du moins unilatéralement au moins un cylindre (2) entraîné en rotation via un moteur (7), le châssis de base (6 ; 30) portant latéralement un tronçon de paroi (15 ; 32) de la chambre de cuisson (12), traversé par le cylindre (2) et comportant un joint d'étanchement périphérique (21 ; 37), caractérisé en ce que le châssis de base (4 ; 6 ; 30) est mobile et en ce que le tronçon de paroi (15 ; 32) est susceptible d'être introduit dans une ouverture de paroi latérale correspondante (17 ; 26) de la chambre de cuisson (12) conjointement avec le cylindre (2) et le tube enfilé (1).

5. Dispositif selon la revendication 4, caractérisé en ce que le cylindre (2) est monté en porte à faux à l'extérieur de la chambre de cuisson (12).

6. Dispositif selon l'une ou l'autre des revendications 4 et 5, caractérisé en ce que l'extrémité libre du cylindre (2) est montée en contrebutée à l'intérieur de la chambre de cuisson (12).

7. Dispositif selon la revendication 4, caractérisé en ce que la direction de rotation du cylindre (2) est périodiquement inversible.

8. Dispositif selon l'une quelconque des revendications 4 à 7, caractérisé en ce que plusieurs cylindres (2) entraînés en rotation sont agencés dans une rangée les uns à côté des autres sur le châssis de base (6 ; 30).

9. Dispositif selon la revendication 8, caractérisé en ce que plusieurs rangées de cylindres (2) entraînés en rotation sont agencées les unes au-dessus des autres sur le châssis de base (6 ; 30).

10. Dispositif selon l'une ou plusieurs des revendications 4 à 9, caractérisé en ce que le châssis de base (6) comporte un cadre mobile latéral (9) s'étendant parallèlement aux cylindres (2), disposé à proximité du sol et comportant des roues (11), ledit cadre étant mobile dans des rails (10) transversalement à la chambre de cuisson (12) et latéralement au-dessous de celle-ci, de telle sorte que les cylindres en rotation (2) sont susceptibles d'être introduits latéralement avec les tubes enfilés (1) dans l'ouverture de paroi (17) prévue dans la chambre de cuisson (12) jusqu'à la fermeture du tronçon de paroi (15).

11. Dispositif selon la revendication 10, caractérisé en ce que le tronçon de paroi (15) porté par le châssis de base (6) va en se rétrécissant par gradins (16) vers l'intérieur en direction de la chambre de cuisson (12).

12. Dispositif selon l'une ou l'autre des revendications 10 et 11, caractérisé en ce que le joint d'étanchement périphérique (20, 21, 22) entre le tronçon de paroi (15) et l'ouverture de paroi (17) est constitué par des barrettes d'étanchement (20, 21) parallèles et dépassant verticalement le long de la bordure du tronçon de paroi (15) et de l'ouverture de paroi (17), qui sont recouvertes et étanchées par une baguette d'étanchement (22) chargée par ressort.

13. Dispositif selon l'une ou plusieurs des revendications 4 à 9, caractérisé en ce que pour le fonctionnement en passage continu, le châssis de base (30) est mobile parallèlement à la chambre de cuisson (12) et porte un tronçon de paroi (32) qui est mené le long d'une ouverture de paroi (26), latérale en forme de fente et traversante en direction longitudinale, de la chambre de cuisson (12), avec étanchement contre les bordures de l'ouverture de paroi (26).

14. Dispositif selon la revendication 13, caractérisé en ce que plusieurs châssis de base (30) chargés de tubes à cuire (1) sont guidés les uns étroitement derrière les autres le long de l'ouverture de paroi (26).

15. Dispositif selon la revendication 13, caractérisé en ce que chaque châssis de base (30) est guidé via des rouleaux (31) dans au moins un rail (38) s'étendant parallèlement à la chambre de cuisson (12).

16. Dispositif selon la revendication 13, caractérisé en ce que le tronçon de paroi mobile (32) est pourvu du côté supérieur et du côté inférieur de gradins (39) parallèles l'un à l'autre.

17. Dispositif selon la revendication 15, caractérisé en ce que le joint d'étanchement entre le tronçon de paroi mobile (32) et l'ouverture de paroi traversante latérale (26) comporte des barrettes d'étanchement (35, 36) dépassant verticalement et s'étendant le long de l'arête supérieure et de l'arête inférieure du tronçon de paroi (32) et de l'ouverture de paroi (26) sur leur face extérieure, lesdites barrettes étant recouvertes en coulissement par des baguettes d'étanchement continues (37) chargées par ressort.
